Europäisches Patentamt

(19) **European Patent Office**

Office européen des brevets

(11) Publication number: **0 118 990**
**A2**

(12) # EUROPEAN PATENT APPLICATION

(21) Application number: **84300652.9**

(22) Date of filing: **02.02.84**

(51) Int. Cl.³: **C 12 H 1/02**

(30) Priority: **14.02.83 US 466309**
**14.02.83 US 466310**

(43) Date of publication of application:
**19.09.84 Bulletin 84/38**

(84) Designated Contracting States:
**AT CH DE FR IT LI**

(71) Applicant: **Corning Glass Works**
**Houghton Park**
**Corning New York 14831(US)**

(72) Inventor: **Weetall, Howard Hayyim**
**4 Deer Run Road**
**Big Flats New York 14814(US)**

(74) Representative: **Smith, Sydney et al,**
**Elkington and Fife High Holborn House 52/54 High**
**Holborn**
**London WC1V 6SH(GB)**

(54) **Wine stabilization using immobilized phenolic compounds or tannic acid.**

(57) A process for stabilizing wine is characterized by:
a) immobilizing tannic acid or a phenolic compound;
b) contacting a wine having components which causes haze formation upon heating with the immobolized tannic acid or the immobilized phenolic compound for a period sufficient to remove the desired amount of haze components; and
c) separating the treated wine from the immobilized tannic acid or the immobilized phenolic compound.

- 1 -

# WINE STABILIZATION USING IMMOBILIZED
## PHENOLIC COMPOUNDS OR TANNIC ACID

The present invention relates to a method and apparatus for stabilizing wine. More particularly, it discloses a novel means for removing compounds which can cause haze formation in wine exposed to higher than ambient storage temperatures. Immobilized phenolic compounds or tannic acid are used.

Background Art

During the handling and bulk shipping of wine, it can be exposed to higher than ambient storage temperatures, such as during truck shipment during the hot summer months. While the wine may stay clear during wine cellar storage, the warmer temperatures can cause hazing problems. In the past this problem was addressed by bentonite treatments known to the art.

Immobilized gallotannins have been reported in the prior art. In an article presented at the Sixth Enzyme Engineering Conference in Japan, 1981, titled "Applications of Immobilized Tannin for Protein and Metal Adsorption", the authors described how immobilized chinese gallotannin reduced the turbidity which results from pasteurizing beer (sake).

Sake produced from fermented rice was pasteurized at 65°C for 15 minutes, whereupon it became turbid. It was then passed through a column packed with immobilized gallotannin. Sake treated in this way was said to not change in turbidity during storage. The disclosed adsorbent was said to hold promise for improving sake, beer, wine and juice by removing undesirable protein constituents.

## Disclosure of the Invention

It was unexpectedly found that wine can be stabilized by using immobilized tannic acid or immobilized phenolic compounds. Wine having components which cause haze formation when heated at above ambient storage temperatures are contacted with immobilized tannic acid or an immobilized phenolic compound for a time sufficient to remove the desired amount of haze components. After this treatment, wine separated from the immobilized tannic acid or phenolic compound is stable, even when subjected to heat for a long time.

It should be noted that tannic acid can be immobilized to many known carriers by various methods known to those of skill in the art. An exhaustive recitation of these methods and carriers is not necessary.

The immobilized heterocyclic phenolic compounds of the present invention can be in two forms, either attached to an insoluble carrier or polymerized into an insoluble state. The term "phenolic" refers to the broad category of chemicals having at least one hydroxy group attached to at least one aromatic hydrocarbon ring, such as phenol-formaldehyde resins. In other words, phenolic refers to compounds having an aryl alcohol component. A list of suitable phenolic compounds, meant to be illustrative and not comprehensive, follows: phenol, tyrosine, phloroglucinol, phenylalanine napthols, phenol-formaldehyde resin, and lignin.

The present invention solves a problem not easily addressed in the prior art, namely, the destabilization of wine under long term, slightly elevated temperatures. This is to be distinguished from other forms of turbidity problems or hazing. Cloudiness due either to chilling, chill haze, or to short periods of excessive heat, such as pasteurization haze, is not the same as that which occurs as a result of the destabilization of wine over the long term.

The following examples further illustrate preferred modes of stabilizing wines by the present invention.

A haze formation test was used to determine whether wine has been stabilized. A 5.0 ml sample of wine was warmed to 45°C for 120 minutes. The sample was then checked for haze formation spectrophotometrically at 550 nm.

## Example 1

### Immobilized Tannic Acid

A white wine supplied by a California vintner not previously stabilized by bentonite treatment was passed through a 30g column at a flow rate of 133 ml/hr. Samples were collected over time and subjected to stabilization testing.

The wine was flowed over a column of immobilized tannic acid. By methods known to one of skill in the art, tannic acid was attached to a $SiO_2$ carrier (40/80 mesh, $380\overset{o}{A}$ average pore diameter) by periodate oxidation.

### Results

| Sample | Initial Visible | $\Delta A_{550}$nm vs. $H_2O$ Overnight 4°C | Heated 2 hrs @ 45°C | Final Visible |
|---|---|---|---|---|
| Untreated Wine | Cloudy | 0.093 | 0.264 | Cloudy |
| Centrifuged Wine | Clear | 0.030 | 0.164 | Cloudy |
| Celite Filtered | Clear | 0.032 | 0.129 | Cloudy |
| Tannic Acid Treated | Clear | 0.028 | 0.034 | Clear |
| Tannic Acid Treated | Clear | 0.023 | 0.031 | Clear |

After passing 2000 ml through the column a sample was again evaluated as follows:

| | | | | |
|---|---|---|---|---|
| Tannic Acid Treated (late) | Clear | 0.023 | 0.104 | Sl. Cloudy |

group attached to at least one aromatic hydrocarbon ring, such as phenol-formaldehyde resins. In other words, phenolic refers to compounds having an aryl alcohol component. A list of suitable phenolic compounds, meant to be illustrative and not comprehensive, follows: phenol, tyrosine, phloroglucinol, phenylalanine napthols, phenol-formaldehyde resin, and lignin.

The present invention solves a problem not easily addressed in the prior art, namely, the destabilization of wine under long term, slightly elevated temperatures. This is to be distinguished from other forms of turbidity problems or hazing. Cloudiness due either to chilling, chill haze, or to short periods of excessive heat, such as pasteurization haze, is not the same as that which occurs as a result of the destabilization of wine over the long term.

The following examples further illustrate preferred modes of stabilizing wines by the present invention.

A haze formation test was used to determine whether wine has been stabilized. A 5.0 ml sample of wine was warmed to 45°C for 120 minutes. The sample was then checked for haze formation spectrophotometrically at 550 nm.

## Example 1

## Immobilized Tannic Acid

A white wine supplied by a California vintner not previously stabilized by bentonite treatment was passed through a 30g column at a flow rate of 133 ml/hr. Samples were collected over time and subjected to stabilization testing.

The wine was flowed over a column of immobilized tannic acid. By methods known to one of skill in the art, tannic acid was attached to a $SiO_2$ carrier (40/80 mesh, 380Å average pore diameter) by periodate oxidation.

## Results

| Sample | Initial Visible | $\Delta A_{550}nm$ vs. $H_2O$ Overnight 4°C | Heated 2 hrs @ 45°C | Final Visible |
|---|---|---|---|---|
| Untreated Wine | Cloudy | 0.093 | 0.264 | Cloudy |
| Centrifuged Wine | Clear | 0.030 | 0.164 | Cloudy |
| Celite Filtered | Clear | 0.032 | 0.129 | Cloudy |
| Tannic Acid Treated | Clear | 0.028 | 0.034 | Clear |
| Tannic Acid Treated | Clear | 0.023 | 0.031 | Clear |

After passing 2000 ml through the column a sample was again evaluated as follows:

| | | | | |
|---|---|---|---|---|
| Tannic Acid Treated (late) | Clear | 0.023 | 0.104 | Sl. Cloudy |

## Example 2

## Carrier Control

A 30g column of $SiO_2$ coupled to gamma-aminopropyl-triethyoxysilane was prepared and operated in a manner identical to the column in Example 1. Unstabilized white wine was heated at 45°C for 120 minutes, then flowed through the control column. The result was:

| Sample | Initial Visible | $\Delta A_{550nm}$ | Final Visible |
|---|---|---|---|
| Untreated Wine | Clear | 0.178+ | Cloudy |

The $SiO_2$ alkylamine acted in a fashion identical to centrifugation and celite filtration. Unlike tannic acid treatment the haze causing components were not removed completely.

## Example 3

## Tannic Acid Coupled, Phenol-Formaldehyde Resin

A phenol-formaldehyde amine functional resin column was run. However, the resin was reacted with periodate oxidized tannic acid as previously described. A 2x30 cm column was used and the wine flow rate through the column was 60 ml/hr.

The results were:

| Total Vol Passed (ml) | $\Delta A_{550nm}$ (45°C Assay Overnight) | |
|---|---|---|
| | Resin | Control |
| 950 | 0.07 | 0.25 |
| 2250 | 0.06 | 0.21 |
| 3020 | 0.08 | 0.27 |
| 5895 | 0.05 | 0.26 |
| 6725 | 0.04 | – |
| 7605 | 0.09 | – |
| 10185 | 0.10 | 0.30 |
| 12765 | 0.09 | – |

These results were similar to that of Example 1.

## Example 4

### Tannic Acid - Formaldehyde Derivative

To 100g $SiO_2$ carrier was added 34g tannic acid plus 250 ml water. The pH was adjusted to 10.8 with NaOH solution. To this was added 29.2 ml of formaldehyde solution (37% solution). This was heated at 70°C for 2 hours, brought to pH 6.7 with $H_2SO_4$, washed once with $H_2O$ (one volume), placed in a 70°C oven and dried overnight.

The product was washed with water for 3 days on a fluidized bed using tap water. This was followed by washing in 0.01N HCl until the solution was clear.

The product was tested for wine stabilization in a 1.5x30 cm column at flow rate of 60 ml/hr.

| Results | 55°C Overnight |
|---|---|
| Control Sample | 0.51 |
| 2 hours | 0.04 |
| 6 hours | 0.07 |

Results show stabilization of the wine occurs.

## Example 5

## Phenol Coupled Porous Silica

The following procedure was used to prepare an immobilized phenol:

Fifty grams $SiO_2$ porous ceramic (350A° average pore diameter) was converted to arylamine by methods described in the literature. This was diazotized with $NaNO_3$/HCl in the cold to phenol. The phenol used was 5.35 ml dissolved in 100 ml 0.05M $NaHCO_3$, pH 8.0. Coupling was for 2 hrs at 0°C. The product was washed in pH 9.0, $NaHCO_3$ solution followed by 0.1M acetate at pH 3.0.

A column of the above compound was poured and unstable wine was passed through it at 110 ml/hr.

Assay was by the 2 minute boil test, wherein a 5.0 ml sample of wine is boiled for 2 minutes, plunged into ice and allowed to stand for 10 minutes. The sample was checked for haze. Results were determined spectrophotometrically at 550 nm and were as folows:

| Time of Column Operation | $\Delta A_{550nm}$ Phenol |
|---|---|
| 1.5 hr. | 0.11 |
| 3.0 hr. | 0.07 |
| 6.0 hr. | 0.08 |
| 8.0 hr. | 0.13 |
| 10.0 hr. | 0.08 |
| 11.5 hr. | 0.11 |
| 13.0 hr. | 0.11 |

These results indicated that phenol does stabilize wine.

## Example 6

### Resorcinol Coupled Porous Silica

The following procedure was used to prepare an immobilized resorcinol:

Fifty grams of porous silica, 350Å average pore diameter previously converted to arylamine was diazotized and coupled to resorcinol using 1% resorcinol in a total volume of 100 ml 0.1M $NaHCO_3$

buffer. The product was washed with water followed by 0.001M HCl.

The coupled silica was poured into a column and unstable white wine was passed through the column at 140 ml/hr.

The wine sample was taken after 200 ml had passed through the column and was subjected to two tests. The first, a boil test resulted in a clear product:

### Boil Test

| Operation Time (hr.) | $\Delta A_{550nm}$ Resorcinol |
|---|---|
| 1 | 0.045 |
| 2 | 0.04 |
| 3 | 0.05 |
| 4 | 0.05 |
| 5 | 0.06 |
| 6 | 0.07 |
| 7.5 | 0.08 |
| 9 | 0.10 |
| 12.5 | 0.12 |

The second test was a haze formation test. A 500 ml sample was warmed to 45°C for 120 minutes. The sample was then checked for haze formation spectrophotometrically at 550 nm. The result was 0.02.

Immobilized resorcinol acted as a stabilizing agent.

## Example 7

### Non-Phenolic Coupled Silica

As a control, a 30g column of $SiO_2$ was coupled to gamma-aminopropyltriethyoxysilane.. A packed column was prepared and operated in a manner identical to that of Examples 1 and 2.

The $SiO_2$ alkylamine column while removing the initially visible precipitate, did not prevent haze formation upon boiling for 2 min. or heating to 45°C for 120 minutes. The $SiO_2$ alkylamine acted in a fashion identical to centrifugation and celite filtration.

| Sample | Initial Visible | $\Delta A_{550nm}$ | Final Visible |
|---|---|---|---|
| Untreated Wine | Clear* | 0.199 | Cloudy |
| | Clear* | 0.178[+] | Cloudy |

*  After coming from the $SiO_2$ column.
[+]  Heated at 45°C for 120 minutes.

## Example 8

### Phenol-Formaldehyde Resin with Amine Groups

To show that polymerized, insoluble phenolic groups also stabilize wine, a column of Dualite A-4 (phenol-formaldehyde resin containing amine function groups previously shown to have no effect) was used. A 2 x 30 cm column of resin as poured and unstable wine was passed through it at 50 ml/hr. Stability was determined by means of the 2 minute boil and the 45°C assays previously described. An untreated control wine was also assayed.

| Results | | | $\Delta A_{550nm}$ | |
| --- | --- | --- | --- | --- |
| | 2 min. boil | | 45°C Assay | |
| Total Vol Passed | Resin | Control | Resin | Control |
| 1100 | 0.01 | 0.04 | 0.03 | 0.26 |
| 3895 | 0.03 | 0.08 | 0.05 | 0.26 |
| 4705 | - | - | 0.03 | 0.19 |
| 5565 | - | - | 0.05 | 0.21 |
| 8145 | | | | |
| 10725 | | | | |

These results indicated that the resin did indeed stabilize the white wine.

Example 9

Lignin-Coupled Porous Silica

Immobilized lignin was prepared as follows:

Thirty grams of Reed Lignin (sulfonated soluble lignin) was dissolved in 200 ml $H_2O$ at pH 9.0. To this was added 2 grams sodium periodate dissolved in 30 ml $H_2O$. The reaction was continued at pH 9.0 for 1 hr. The result was then added to 50

grams of alkylamine-$SiO_2$ carrier previously soaked in 0.1M phosphate, pH 10.0. The phosphate was decanted off before addition of the lignin and allowed to react overnight at pH 9.0.

The next morning the product was washed with water and 0.001M HCl and placed in a 2 x 30 cm column. Unstable white wine was passed through at 50 ml/hr. After 4 hours, the effluent was tested for activity.

The effluent was tested with the following results:

2 min boil (880 ml)

|  | $\Delta A_{550nm}$ |
| --- | --- |
| Untreated control | 0.05 |
| Lignin treated | 0.01 |

| Total Vol Passed (ml) | $\Delta A_{550nm}$ (45°C Assay) | |
| --- | --- | --- |
|  | Lignin | Control |
| 880 | 0.04 | 0.21 |
| 3460 | 0.07 | 0.30 |
| 6040 | 0.09 | 0.30 |

Immobilized lignin stabilized wine.

## Example 10

### Phenol-Formaldehyde Resins
### Without Amine Groups

Finally, a porous phenol-formaldehyde resin having only hydroxyl groups was tested. The average pore diameter was 300Å.

The resin was washed with 0.001M HCl overnight and soaked in white wine for 30 minutes. A 1.5 cm x 40 cm column was poured. The unstable wine was passed through the column and the effluent tested for stability by the 45°C overnight assay. Flow rate was set at about 60 ml/hr.

The results were:

| Total Volume Passed (ml) | $A_{550\ nm}$ Resin | Control |
|---|---|---|
| 1120 | 0.05 | 0.27 |
| 1730 | 0.05 | 0.25 |
| 3030 | 0.39 | 0.10 |
| 7170 | 0.24 | 0.34 |

These results indicated that the phenol-formaldehyde resin stabilized the wine.

- 14 -

0118990

CLAIMS:

1.    A process for stabilizing wine comprising the steps of:

(a) immobilizing tannic acid or a phenolic compound;

(b) contacting a wine having components which cause haze formation upon heating with the immobilized tannic acid or the immobilized phenolic compound for a period sufficient to remove the desired amount of haze components;  and

(c) separating the treated wine from the immobilized tannic acid or the immobilized phenolic compound.

2.    A process as claimed in claim 1 characterised in that the phenolic compound is selected from lignin, phenol, resorcinol, phloroglucinol, tyrosine, phenylalanine, and phenol-formaldehyde resin.

3.    A process as claimed in claim 1 or claim 2 characterised in that the tannic acid or the phenolic compound is immobilized by attachment to an insoluble carrier.

4.    A process as claimed in claim 3 characterised in that the attachment is by means of periodate oxidation to a silicon dioxide carrier.

5.    A process as claimed in claim 1 or claim 2 characterised in that the phenolic compound is immobilized by polymerization into an insoluble phenolic polymer.

Example 10 Phenol-Formaldehyde Resins
Without Amine Groups


Finally, a porous phenol-formaldehyde resin having only hydroxyl groups was tested. The average pore diameter was 300Å.

The resin was washed with 0.001M HCl overnight and soaked in white wine for 30 minutes. A 1.5 cm x 40 cm column was poured. The unstable wine was passed through the column and the effluent tested for stability by the 45°C overnight assay. Flow rate was set at about 60 ml/hr.

The results were:

|  | $A_{550\ nm}$ | |
| Total Volume Passed (ml) | Resin | Control |
| 1120 | 0.05 | 0.27 |
| 1730 | 0.05 | 0.25 |
| 3030 | 0.39 | 0.10 |
| 7170 | 0.24 | 0.34 |

These results indicated that the phenol-formaldehyde resin stabilized the wine.

0118990

CLAIMS:

1. A process for stabilizing wine comprising the steps of:

(a) immobilizing tannic acid or a phenolic compound;

(b) contacting a wine having components which cause haze formation upon heating with the immobilized tannic acid or the immobilized phenolic compound for a period sufficient to remove the desired amount of haze components; and

(c) separating the treated wine from the immobilized tannic acid or the immobilized phenolic compound.

2. A process as claimed in claim 1 characterised in that the phenolic compound is selected from lignin, phenol, resorcinol, phloroglucinol, tyrosine, phenylalanine, and phenol-formaldehyde resin.

3. A process as claimed in claim 1 or claim 2 characterised in that the tannic acid or the phenolic compound is immobilized by attachment to an insoluble carrier.

4. A process as claimed in claim 3 characterised in that the attachment is by means of periodate oxidation to a silicon dioxide carrier.

5. A process as claimed in claim 1 or claim 2 characterised in that the phenolic compound is immobilized by polymerization into an insoluble phenolic polymer.

6.    The process recited in claim 3 wherein the
attachment is by means of formaldehyde-tannic acid
copolymerization onto the carrier.

7.    The process recited in claim 1 wherein the wine is
white wine.        .            •

8.    An apparatus for carrying out the method of any
one of claims 1-7, characterized by:
        a reactor containing immobilized tannic acid or an
immobilized phenolic compound,
        a means for contacting wine having components
which cause haze formation upon heating with the
immobilized phenolic compound contained by the reactor;
and
        a means for separating the treated wine from the
reactor.